# EUROPEAN PATENT APPLICATION

(11) **EP 2 833 680 A1**
(43) Date of publication of application: **04.02.2015**
(21) Application number: 13360014.8
(22) Date of filing: 29.07.2013
(51) Int. Cl.: H04W 52/02

(54) **An energy limited node, an access network node, a communications system, and a communication method**

(71) Applicant: ALCATEL LUCENT, 92100 Boulogne-Billancourt (FR)
(72) Inventor: Kennedy, Irwin O., Dublin (IE); Venkateswaran, Vijay, Dublin (IE); Rulikowski, Pawel, Dublin (IE)
(74) Representative: Greenwood, Matthew David

(57) **Abstract**

There is provided an energy limited node 102 for use in a communications network 100 comprising an access network node 104. The energy limited node 102 comprises a transceiver 106 operable to change its operational mode from a sleep mode in which the transceiver is not operable to communicate with the access network node to an active mode in which the transceiver is operable to communicate with the access network node; and a wake-up radio 112 comprising: a detector 302 operable to detect a received a wake-up signal from the access network node; and an identifier 304 operable to determine that the received wake-up signal corresponds to the transceiver of the energy limited node, wherein the transceiver is operable to change its operation mode from a sleep mode to an active mode upon determination that the received wake-up signal corresponds to the transceiver.

## Description

### FIELD OF THE INVENTION

The present invention rotates to an energy limited node for use in a communications network comprising an access network node, a communications system, and a communications method.

### BACKGROUND OF THE INVENTION

Machine to machine (M2M) networks and devices are increasingly growing in number and it is projected that they will greatly outnumber existing cellular networks. However, existing personal area networks (PAN) standards such as IEEE 802.15.4 and Zigbee are not equipped to handle such a large amount of traffic, particularly while increasing range and reducing power. These networks are expected to cover a wide variety of applications ranging from smart energy meters, temperature/traffic monitoring, body area networks and industrial automation to name but a few examples.

One important consideration in machine to machine communications is the battery life of sensor nodes or indeed other energy limited nodes in the network. It is desirable that battery lifetimes of sensor nodes for machine to machine communications should be of the order of years as opposed to days, as seen in cellular communications, and less than 1 to 2 months in current personal area networks and machine to machine standards.

In view of this, sensor nodes are required to have a low duty cycle and remain in sleep mode for most of the time. To transfer information to the network, sensor nodes occasionally transition to active transmit and receive modes in order to transmit and receive to and from the network.

Consider a widely used low-power transceiver, such as a Texas Instruments' CC2420 sensor node communications chip. There are 4 modes of operation in most low-power wireless transceivers. Table 1 shows the power consumption in the various operational modes of a Texas Instruments (RTM) CC2420 sensor node communications chip.

**Table 1**

| Operation | Volt. Reg & Osc | Transceiver | Power |
|---|---|---|---|
| Sleep | Off | Off | 30 µW |
| Idle | On | Off | 3 mW |
| Receive | On | On | 55 mW |
| Transmit (0dB) | On | On | 49 mW |

To increase the battery life, transceivers such at the CC2420 chip are required to have a very low duty cycle, and remain in sleep mode of operation for most of the time (> 99%) and hence consume very low-power. Occasionally, these transceivers wake-up and transition to transmit and receive modes and communicate with the overall network.

It is therefore desirable to manage the wake-up and sleep cycle of any M2M device or a transceiver, such that the time that the sensors stay awake for anything other than data transfer is minimized.

One technique for controlling the duty cycle of a sensor node is to synchronize sensor nodes to periodically wake up from a sleep mode to an active mode. In the active mode, the sensor node scans the physical network and enables information transfer to and from the network. This technique is disadvantageous as the sensor node will periodically wake up from the sleep mode to the active mode, regardless of whether it has any information to transmit/receive, and may involve a sensor transitioning to an active state to serve no function.

Another technique for controlling the duty cycle of a sensor node is to control the sensor node to remain in an idle state and transition to an active mode in which the sensor scans the physical network and enables information transfer to and from the network. The idle state is a state in which the transmit/receive functions are not actually being used but are being powered such that can be readily used. Therefore, in the idle mode, the sensor node consumes less power than in the transmit/receive modes, but consumes more power than when in the sleep mode.

A further technique for controlling duty cycle of a sensor node is to periodically wake up a sensor node to monitor channel for control signalling. Depending on events from the sensor or co-ordinator, transmission with the network can be controlled. This is disadvantageous at it requires the sensor nodes to wake up regardless of whether there is anything to sense, thereby potentially wasting power.

All of the above techniques require sensing and acknowledgement of the wireless channel to achieve communication, which in turn consumes a significant amount of energy. Therefore, sensor nodes using the above techniques will be limited to battery lifetimes of the order of 1 to 2 months. In particular, in medium to large networks, the sensor nodes may spend significantly more energy for control and sleep cycle management when compared to communication updates with the network.

Also, in order to achieve a large-scale deployment of M2M networks, it is also desirable to increase the communications range of M2M networks to that of metro cell network and cover hard to reach places. In other words, it is desirable to increase the communications range of M2M networks to around 300m. This would also allow use of existing access network infrastructure, back-haul and site-costs. However, current implementations and standard limits the communications range of M2M networks to approximately 30m.

It is also desirable for M2M networks to deal with diverse traffic demands while catering different applications.

Therefore, it is desirable to move away from existing sleep management techniques and reduce the amount of time that these transceivers spend on control and listening to the wireless channel, while also accounting for increased communications range as well as diverse traffic demands and applications.

It is therefore desirable to provide an energy limited node in which the power consumption is decreased, thereby increasing battery life.

### SUMMARY OF THE INVENTION

According to a first aspect, there is provided an energy limited node for use in a communications network comprising an access network node, the energy limited node comprising: a transceiver operable to change its operational mode from a sleep mode in which the transceiver is not operable to communicate with the access network node to an active mode in which the transceiver is operable to communicate with the access network node; and a wake-up radio comprising: a detector operable to detect a received a wake-up signal from the access network node; and an identifier operable to determine that the received wake-up signal corresponds to the transceiver of the energy limited node, wherein the transceiver is operable to change its operation mode from a sleep mode to an active mode upon determination that the received wake-up signal corresponds to the transceiver.

The identifier may be operable to determine that the received wake-up signal uniquely corresponds to the transceiver of the energy limited node. The identifier may be operable to determine that the received wake-up signal corresponds to the transceiver of the energy limited node as a subset of a plurality of energy limited nodes to be woken up.

The detector may be an ultra-low power receiver operable to detect the signal energy of the wake-up signal and may not contain power hungry components such as PLL, advanced digital processors, etc.

The identifier may be operable to determine that the received wake-up signal corresponds to the transceiver of the energy limited node by comparing the detected signal energy signature sequence of the wake-up signal with identification information of the transceiver stored in the energy limited node.

The identifier may be a correlator operable to correlate the detected signal energy signature sequence of the wake-up signal with identification information of the transceiver stored in the energy limited node. The correlator may comprise of minimal electronic components such as (but not limited to) an XNOR gate and a counter to ensure ultra-low power operation. The transmission rates of wake-up signal is minimized to ensure that ultra-low power receivers can detect and identify the wake-up signals.

The wake-up signal may comprise a code sequence to identify the transceiver of the energy limited node.

The code sequence may have properties to separate and robustly identify the transceiver of the power limited node. The code sequence may be a Gold code.

The energy limited node may further comprise: a timer operable to periodically activate and/or de-activate the wake-up radio. Should the wake-up radio not receive a wake-up signal from the access network node in a given time period, the timer may be operable to maintain the wake-up radio in sleep mode (de-activated mode) for a period of time. This period of time may be longer than the time period between the periodic activations.

The energy limited node may further comprise a trigger operable to activate and /or deactivate the wake-up radio. The trigger may activate and/or deactivate the wake-up radio based on environmental factors. The trigger may be one or more of a vibration sensor, a wind sensor, and/or a solar cell.

The energy limited node may further comprise a sensor operable to sense one or more parameters, wherein the transceiver of the energy limited node may operable to change its operational mode from a sleep mode to an active mode if one or more parameters sensed by the sensor is above a threshold value.

The detector may be operable to wake-up the identifier upon detection of a wake-up signal.

According to a second aspect of the invention, there is provided an energy limited node for use in a communications network comprising an access network node, the energy limited node comprising: a transceiver operable to change its operational mode from a sleep mode in which the transceiver is not operable to communicate with the access network node to an active mode in which the transceiver is operable to communicate with the access network node; a sensor operable to sense one or more parameters; and a wake-up radio comprising: a detector operable to detect a wake-up signal from the access network node; and an identifier operable to determine that the received wake-up signal corresponds to sensor of the energy limited node, wherein the sensor is operable to be enabled upon determination that the received wake-up signal corresponds to the sensor.

According to a third aspect of the invention, there is provided a communications system, comprising: an access network node operable to transmit a wake-up signal; and an energy limited node for use in a communications network comprising an access network node, the energy limited node comprising: a transceiver operable to change its operational mode from a sleep mode in which the transceiver is not operable to communicate with the access network node to an active mode in which the transceiver is operable to communicate with the access network node; and a wake-up radio comprising: a detector operable to detect a wake-up signal from the access network node; and an identifier operable to determine that the received wake-up signal corresponds to the transceiver of the energy limited node, wherein the transceiver is operable to change its operation mode from a sleep mode to an active mode upon determination that the received wake-up signal corresponds to the transceiver.

According to a fourth aspect of the invention, there is provided a communication method for a communications network comprising an access network node and an energy limited node having a wake-up radio and a transceiver, the method comprising: transmitting a wake-up signal from the access network node; receiving the wake-up signal at the wake-up radio of the energy limited node; determining at the wake-up radio of the energy limited node that the received wake-up signal corresponds to the transceiver of the energy limited node; and changing the operational mode of the transceiver from a sleep mode in which the energy limited node is not operable to communicate with the access network node to an active mode in which the energy limited node is operable to communicate with the access network node upon determining that the received wake-up signal corresponds to the transceiver of the energy limited node.

According to a fifth aspect of the invention, there is provided a computer program product operable when executed on a computer to perform the method of the above fourth aspect.

Further particular and preferred aspects of the invention are set out in the accompanying independent and dependent claims.

### BRIEF DESCRIPTION OF THE DRAWINGS

Some embodiments of the apparatus and/or methods in accordance with embodiment of the present invention are now described, by way of example only, with reference to the accompanying drawings, in which:
Figure 1 schematically shows a sensor node and an access network node according to an embodiment;
Figure 2 shows the sleep control operation of a sensor node in an embodiment;
Figure 3 schematically shows a wake-up radio according to an embodiment;
Figure 4a schematically shows an embodiment of a wake-up radio for an OOK signalling format;
Figure 4b schematically shows an embodiment of a wake-up radio for an FSK signalling format;
Figure 4c schematically shows an embodiment of a wake-up radio for an FSK signalling format;
Figure 4d schematically shows an embodiment of a wake-up radio for an FSK signalling format;
Figure 5 schematically shows a sensor node comprising a timer;
Figure 6a shows duty cycles of a wake-up radio without a timer; and
Figure 6b shows duty cycles of a wake-up radio with a timer.

### DESCRIPTION OF EMBODIMENTS

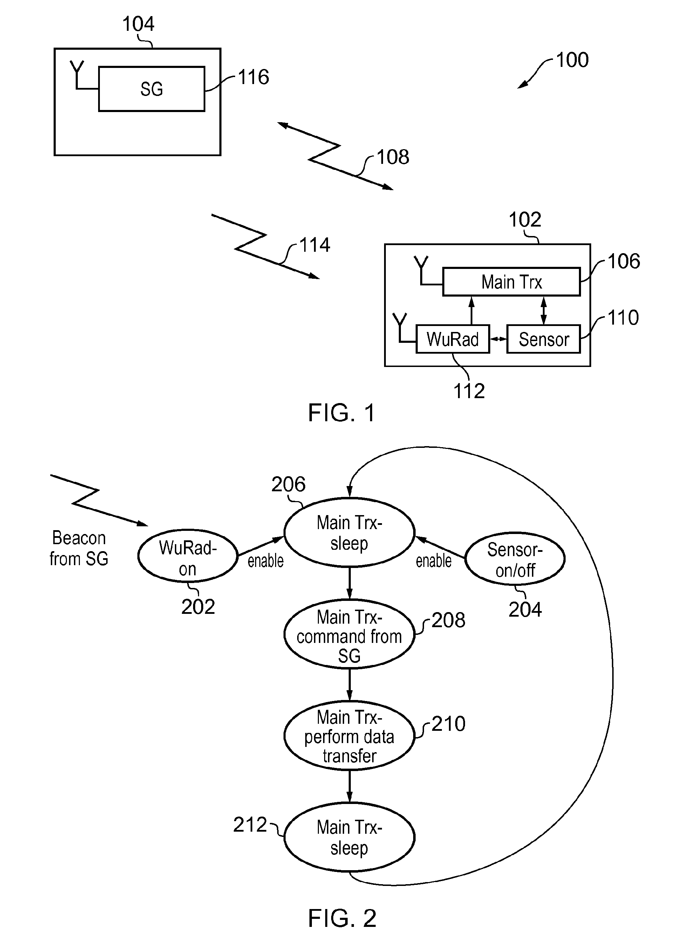

Figure 1 shows a communications network 100 comprising a wireless sensor node 102 in communication with an access network node 104. The sensor node 102 is an energy limited node. The access network node 104 communicates with a machine to machine server via an access network (not shown).

The wireless sensor node 102 comprises a low power transceiver 106 for data communications with the access network node 104 over bidirectional communications link 108. The low power transceiver 106 is sometimes referred to as the main transceiver. The low power transceiver 106 may communicate with the access network node 104 via a Bluetooth, Zigbee or any other suitable personal area network or machine to machine network communications protocol.

The wireless sensor node 102 also comprises a sensor 110, which may be any sensor, such as, but not limited to a temperature sensor, gas sensor, movement sensor, traffic sensor or energy meter. The wireless sensor node 102 also comprises a wake-up radio 112. The wake-up radio 112 can detect/receive control signals/beacon signal/wake-up signals from the access network node 104 over uni-directional communications link 114 and can trigger the transceiver 106 to change from a sleep mode to an active mode in response to the detected/received control signal. Although not shown in Figure 1, it should be understood that the transceiver 106 may be implemented as part of a control unit or CPU or indeed a control unit or CPU may be provided as a separate unit to the transceiver 106.

The access network node 104 comprises a sensor gateway (SG) 116 in communication with the access network. The access network node 104 is operable to transmit a control signal/wake-up signal to the wireless sensor node 102 that can be detected/received by the wake-up radio 112. It should be appreciated that any suitable transmitter can be used in the access network node 104 to transmit control signals to the sensor node 102.

In Figure 1, the mains-powered SG 116 of the access network node 104 generates a control signal or beacon signal to wake up the sensor node 102. The wake-up radio 112 detects the control signal and in response to the control signal, the sensor node transitions from a sleep mode in which in which sensor node 102 is not operable to communicate with the access network node 104 to an active mode in which the sensor node is operable to communicate with the access network.

It should be noted that the sensor node may be woken up by wake-up radio 112 waking up the transceiver 106 only, the transceiver 106 and the sensor 110 or the sensor 110 only. In the embodiment in which the only the sensor is woken up in response to the beacon signal, the sensor may be operable sense one or more parameters and then wake up the transceiver 106 should the sensor determine that the transceiver should be woken up based on the sensed parameters.

It should be appreciated that any suitable transmitter and receiver could be used in the embodiment of Figure 1, such that the access network node can transmit a control signal and the sensor node can receive the control signal.

By transmitting a control signal to wake up the sensor node, energy saving can be achieved as the sensor node will only wake up when requested to do so by the access network node and the network. This will prevent the sensor node from unnecessarily waking up of its own accord as in the known techniques. By providing the sleep management functions in the mains-powered SG of the access network node, the battery lifetime of the remote wireless sensor node can be greatly extended.

Although not shown in Figure 1, it should be appreciated that a plurality of sensor nodes may be provided in communication with the access network node. The access network node may comprise a SG for data communications with the access network as well as the plurality of wireless sensor nodes. Each sensor node of the plurality of sensor nodes may comprise a WuRad that is operable to receive/detect the control signal from the access network node and a transceiver for data communications with the access network node. There may be multiple transceivers/channels in all sensor nodes and the WSN gateway such that control signals may be sent to specific ones of the plurality of sensor nodes.

In the embodiment of Figure 1, the wake-up radio (WuRad) 112 is an ultra-low power wake-up radio. The ultra-low power WuRad 112 is always turned on and is used to detect the beacon signal/wake-up signal coming from the SG 116. The transceiver 106 is on, only when it gets an enable signal from either the data sensor 110 or the WuRad 112.

Figure 2 shows the sleep control operation of a sensor node of Figure 1. As can be seen, in step 202, the WuRad 112 is powered on and receives a beacon from the SG 116. Alternatively or in addition, at step 204, the sensor 110 may indicates a change of state. Subsequently, the transceiver 106 receives the enable signals from the WuRad 112 and/or sensor 110 and transitions from its sleep mode in step 206 to an active mode, in which the transceiver 106 checks for relevant control commands from the SG 116 in step 208, and/or transfers data in step 210. In steps 208 and 210, control is transferred from WuRad 112 to the transceiver 106 for subsequent operations. Once the data transfer and paging is done, the transceiver transitions back to the sleep mode in step 212.

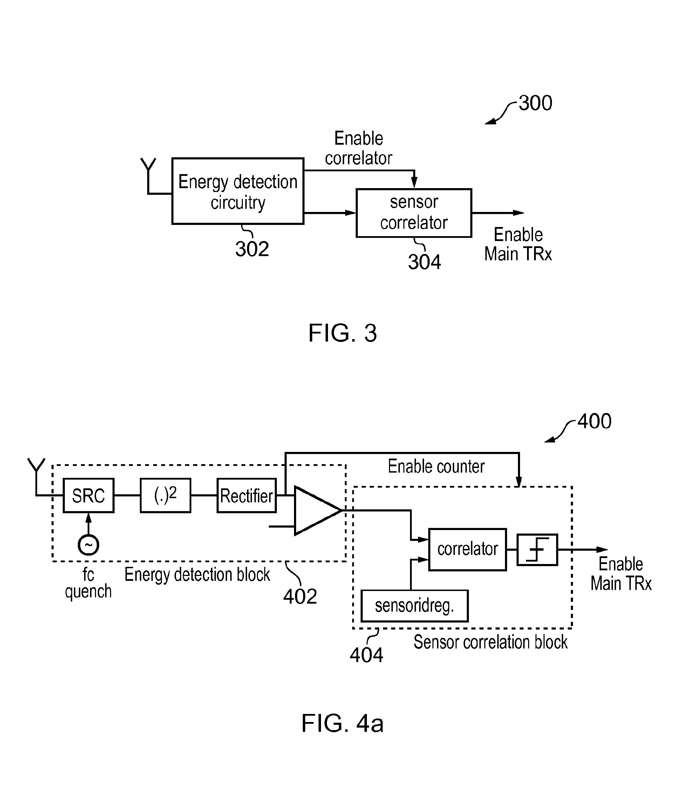

One efficient and ultra-low power consuming technique to receive wake-up/beacon signals is through a super-regenerative receiver (SRR) wake-up radio. A SRR based wake-up radio will operate at ultimately a negligible fraction of the overall power. Figure 3 schematically shows an ultra-low powered wake-up radio 300.

As can be seen in Figure 3, the WuRad 300 comprises an energy detector 302 and a sequence correlator 304.

The energy detector 302 is operable to receive and the detect signal energy in the wake-up signal from the access network node. The sequence correlator is operable to determine if the received wake-up signal corresponds to the particular transceiver of the energy limited node that has received the wake-up signal.

The principle behind the operation of WuRad 300 of Figure 3 is to detect signal energy at a specific frequency, and subsequently correlate the signal energy with a sequence of pulses. This sequence of pulses correspond to the sensor/transceiver identity. As stated above, these two steps are performed separately in the energy detector 302 and sequence correlator 304 of Figure 3.

A very low-power and low-cost technique to achieve this is through the use of a super-regenerative receiver (SRR). The ultra-low power SRR contains very few transceivers components to perform the dual tasks of demodulation and detection, however these ultra-low power receivers are very sensitive and their operation is limited to low-rate, low-fidelity signaling and applications.

The SRR primarily contains a periodically quenched oscillator. This quenching circuitry can be either internal to the SRR or form an external circuit. The quenching frequency "f1" needs to be much lower than RF frequency but higher than the Nyquist frequency of the modulating signal.

The operation of SRR can be viewed as an unstable amplifier or oscillator. In a typical oscillator, signal/noise initiates periodic oscillations. The startup time of those oscillations is a strong function of signal/noise spectrum content and its amplitude and generally the following rule applies that the more intense the noise the faster start-up of oscillations. At the start of oscillations, the SRR will typically have a gain in the order of millions, leading to a very sensitive detector.

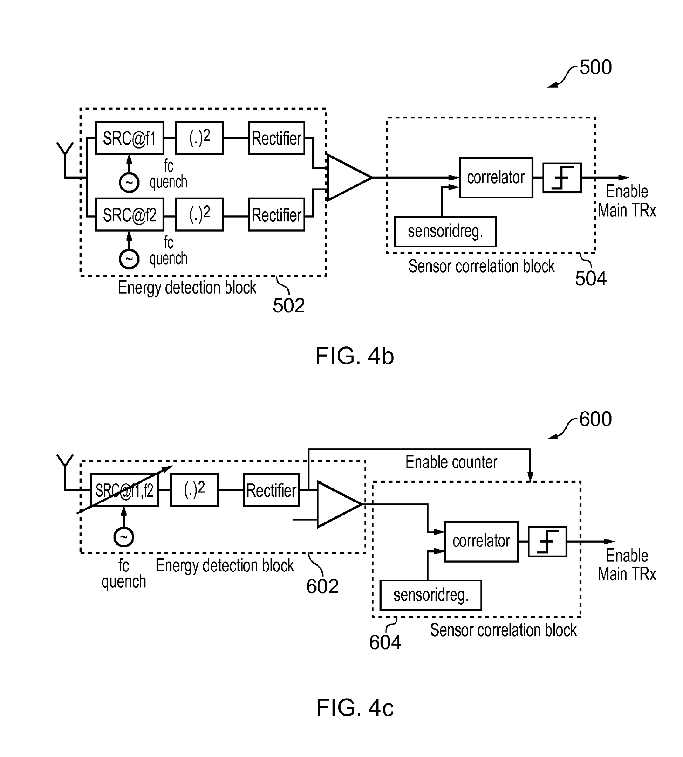

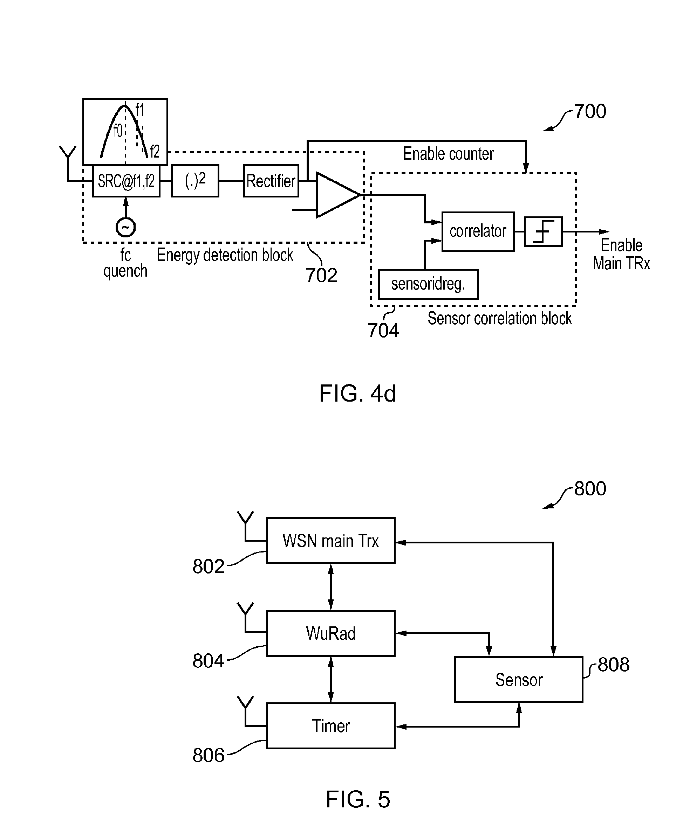

In the SRR based WuRad 300, when the desired RF signal from sensor gateway 116 is received, it will have similar effect to the noise as described above. The SRR instantaneously oscillates and this resonant signal (with a considerably high energy) is detected. On the other hand, when there is no signal at the antenna of the energy detector, the SRR either takes a very long time to oscillate, or does not oscillate at all. Hence no signal is seen at the output of the energy detector 302. The overall circuitry operates as an RF detector/sampler as will be described below in relation to Figure 4.

Upon detecting a signal, the energy detector relates these oscillations to a specific signal. More specifically, the start-up time of these oscillations specifies the information content of the specific signal. However the SRR cannot identify whether this signal/message corresponds to the desired sensor. The sensor identification is done using a sensor correlator block 304.

It should be noted that the energy detector is always powered on. However, as the energy detector 302 has very power consumption, it being constantly turned on does not have a major detrimental impact on the battery lifetime of the sensor node. The sequence correlator 304 is powered off until the energy detector detects a wake-up signal and enables the sequence correlator 304. In this way, the sequence correlator is only active when a signal has been detected by the energy detector 302.

The sequence correlator 304 is operable to correlate the received signal sequence with a sensor/transceiver identity and enables the transceiver 106 if the received signal sequence relates to the sensor/transceiver of the sensor node 102. The sensor/transceiver identity may be stored in a register within the WuRad circuitry. Again, it is important to note that the sequence correlator 304 is only enabled, whenever the signal energy is detected at the energy detector 302.

Depending on correlation between the received sequence and pre-stored sensor/transceiver identity, the WuRad circuitry may wake-up the transceiver 106 of the sensor node 102. Alternatively, the transceiver 106 can also be enabled by the sensor 110, when the sensor 110 detects a trigger or an emergency signal.

Consider that the SG 116 transmits a beacon sequence. It is desirable to therefore consider a set of signaling sequences (or codes) with good correlation properties for robust identification of a specific transceiver 106 in a noisy environment which may be subject to fading.

The sequence correlator 304 of Figure 3 identifies the transceiver 106 for wake-up, by using correlation based sequence estimation (CSE), in which the energy detector output of WuRad is correlated with a sensor/transeceiver identification stored inside a shift register as shown in the wake-up radio. The CSE can be implemented using a simple XNOR gate followed by a counter arrangement.

Given the CSE arrangement, the next objective is robust design of a signal sequence to distinguish sensor/transceiver identity. The necessary condition for robust sensor distinction is to design sequences with good correlation properties, such as Gold codes. Note that in a CDMA system, the input signals are spread (multiplied) with a typically short code sequence; subsequently a decorrelator de-spreads and estimates the input signal. In the sequence correlator 304 of Figure 3, however, such code sequences are used to directly identify the desired sensor/transceiver.

As described above, the energy detector 302 is a SRR that detects signal energy for various signaling formats. Once this signal energy is detected, it is then necessary to ensure that appropriate transceiver 106 is enabled based on the specific message in the wake-up signal.

This requires that the WuRad 300 is able to distinguish signals coming from different sensors with a high likelihood. Also note that with increased range, the received signals are below the noise floor.

In order to minimize energy consumption in the WuRad 300, complicated decoders, such as maximum likelihood estimators cannot be used. One low-complexity estimation technique is to correlate the comparator output with a sensor identification stored inside the shift register. If the signal sequences corresponding to sensor identity are orthogonal and uncorrelated to each other, the correlation based sequence estimator can lead to optimal detection.

The CSE can be implemented using a simple XNOR gate followed by a counter arrangement. Note that the counter outputs are clocked at frequency 'f1'. The final output of the counter specifies the amount of correlation between the given sensor identification and the received sequence. If this is above a specified threshold, then the transceiver is woken up, else the sensor correlation block 304 is turned off leaving only the energy detector 302 on to check for signal energies at 'f1'.

Given CSE to estimate the sensor identity, the next objective is robust design of a signal sequence to distinguish sensor identity when the signals are submerged in noise. This requires that the signal sequences selected must have good auto and cross-correlation properties. To be more specific, the necessary condition for robust sensor distinction is that these sequences must have a large auto-correlation between time-shift of the same sequence and poor cross-correlation between different sequences.

Code sequences such as gold codes satisfy such properties and are widely used in CDMA like standards. Note that in a CDMA system, the input signals are spread (multiplied) with a typically short code sequence; subsequently a decorrelator de-spreads and estimates the input signal. In the sensor correlator 304 of Figure 3, such code sequences are used to directly identify the desired sensor. Note that the code sequences are typically large. A Gold code with sequence length N can be used to identify N+2 sensors when the signals are submerged well below the noise floor. For large networks (N>1000), a modified version of error correcting codes that provides sequence length <<N can be used.

The use of low-complexity energy detector 302 and sensor correlator 304 allows the WuRad 300 to identify a specific sensor/transceiver from the wake-up signal and to enable the sensor/transceiver if instructed to do so by the wake-up signal.

The components of the energy detection circuitry 302 may vary based on the specific signaling technique used and that the SRR WuRad design is dependent on the specific transmission schemes.

Figures 4a, 4b, 4c and 4d show alternative detection circuitry for different signaling techniques and transmission schemes. In each case, the proposed WuRad detects signal energy and compares the received sequence with sensor identity/prestored message to enable the specific main transceiver.

Figure 4a shows a WuRad 400 in an On-off keying (OOK) transmission scheme comprising an energy detector 402 and a sensor correlator 404. In this format, the message bits '1' or '0' are transmitted respectively either as a signal at frequency 'f1' or as 'no signal'. Whenever such signals are transmitted, the SRR energy detector 402 detects signals at 'f1', builds oscillations and identifies that a '1' is transmitted. In the absence of oscillations, the SRR energy detector detects a '0'. Subsequently, these signal oscillations are used with a rectifier and comparator arrangement.

Figure 4b shows a WuRad 500 in a Frequency-shift keying (FSK) transmission scheme comprising an energy detector 502 and a sensor correlator 504. In this format, the message bits '1' and '0' are modulated as signals at two frequencies 'f1' and 'f2'. Figure 4b shows a first possible approach in which the SRR comprises two different oscillators tuned to frequencies 'f1' and 'f2' and followed by two-rectifiers. The rectifier outputs are compared with each other, this comparator output provides either a '1' or a '0' depending on the resonance at corresponding oscillator as shown in Figure 4b.

Figure 4c shows a WuRad 600 in a Frequency-shift keying (FSK) transmission scheme comprising an energy detector 602 and a sensor correlator 604. In this format, the message bits '1' and '0' are modulated as signals at two frequencies 'f1' and 'f2'. Figure 4b shows a first possible approach in which instead of using two different oscillators tuned to f1 and f2 as in Figure 4b, only one oscillator is used which is initially tuned to 'f1' and check for oscillations. Subsequently, the oscillator is re-tuned to 'f2' and checked again for oscillations. These two outputs can be directly compared to wake-up the main transceiver. Such an arrangement reduces the number of components inside WuRad, further reducing the overall energy consumption, as can be seen in Figure 4c.

Figure 4d shows a WuRad 700 in a Frequency-shift keying (FSK) transmission scheme comprising an energy detector 702 and a sensor correlator 704. In the embodiment of Figure 4d, the SRR WuRad 700 can be tuned on the slope of frequency response to create a frequency sensitive amplitude response (FM to AM conversion); the signal with a frequency closer to a regenerative oscillator's frequency f0 will result in faster build-up of the SRR's oscillations, as shown in Figure 4d.

Although not shown in the figures, an additional feedback loop controlling quench waveform may be implemented.

It should also be appreciated that the proposed the SRR WuRad can be used in a Binary phase shift keying (BPSK) transmission scheme. This implementation relies on phase modulation of feedback loop of the SRR oscillator and detection of low pass signal (envelope) of the resulting signal. Alternatively, consider a detector which relies on D flip-flop and data phase-locked clock may be implemented.

The SRR based WuRad provides a lower power solution to monitoring for beacon signals to wake up the main transceiver of the sensor node. However, in some applications, these power levels are not preferred. For such applications, it is may be desirable to attach a coarse timer and periodically de-activate the WuRad. Figure 5 schematically shows an energy limited sensor node 800 comprising a main transceiver 802, a WuRad 804, a timer 806 and a sensor 808.

The timer 806 shown in Figure 5 offers an additional option for further reduction in energy consumption, by allowing the WuRad 804 to be switched off, and subsequently woken up after a specified period, rather than being constantly active. The timer 806 also allows the sensor 808 to be switched off, and subsequently woken up after a specified period of time, rather than being constantly active. As shown in Figure 5, the WuRad 804 can also communicate with the sensor 808 to wake-up the sensor node upon receipt of an appropriate wake-up signal. Further, it should be noted that the sensor 808 may also be operable to wake-up the WuRad 804 to listen for network requests, for example in case a network event has occurred and some co-ordination is required.

Also as shown in Figure 5, the sensor 808 can communicate with the transceiver 802 so that the sensor 808 can trigger the transceiver 802 to wake-up, should the sensor 808 sense/detect/measure a parameter indicating that such a wake-up of the transceiver 802 should occur.

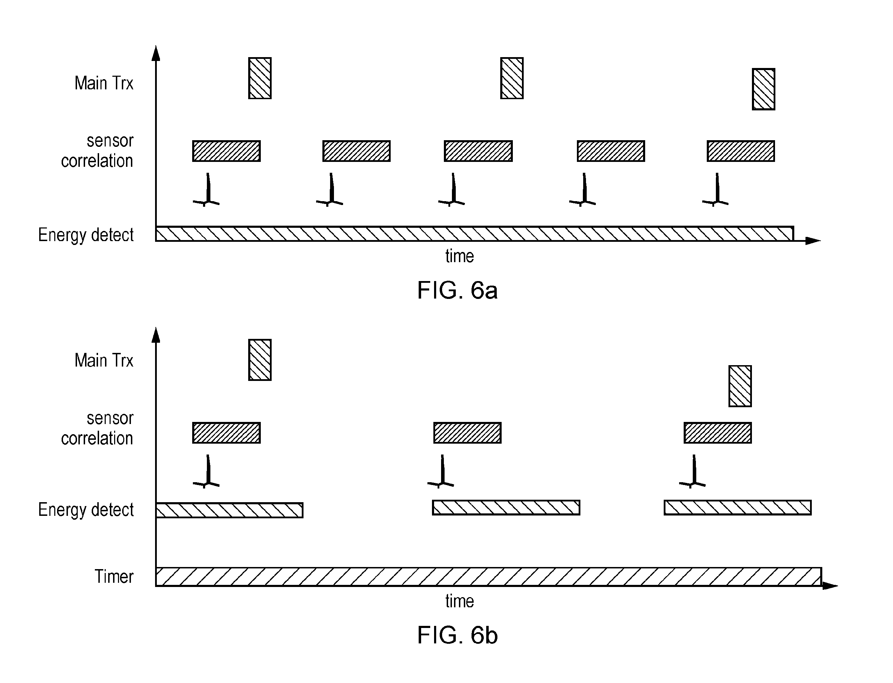

Figure 6a shows an example of WuRad operation without a timer. As can be seen in Figure 6a, the energy detector is constantly active, and detects a periodic beacon signal to enable the sensor correlator, which in turn enables the main transceiver. Figure 6b shows an example of WuRad operation with a timer. As can be seen in Figure 6b, the timer is constantly active, but the energy detector is only active periodically for a set period of time. While the energy detector is active, it detects a periodic beacon signal to enable the sensor correlator, which in turn enables the main transceiver.

Some scenarios when the WuRad can be switched off are described below:

In some applications such as smart meters, the downlink traffic is periodic and low-rate. In these cases, the coarse local timer reference can allow energy savings by deactivating the energy detector circuitry, although it is noted that this de-activation must also account for the timer error. Upon a timer period elapsing, the WuRad 804 wakes-up based on the timer 806 and operates as previously described above. After signal energy detection and sensor identity correlation, the main transceiver 802 is enabled. It is important to note that in this embodiment, the sensor node 800 still relies on WuRad 804 for the fine grain synchronization, i.e. energy detection and enabling main transceiver 802 and it still relies on main transceiver 802 for data/transfer and communications

Another scenarios when the WuRad can be switched off, is when downlink latency can be tolerated. In other words, if the sensor node is latency tolerant or dependent on environment (such as agricultural sensor or a smart city sensor), the sleep operation can be reformulated similar to the periodic traffic and downlink beacon scenario.

As an alternative or in additional to a coarse timer, it may also be desirable to use a trigger that gets activated based on the environment, such as a vibration sensor/wind sensor or solar cell.

The above describes an energy efficient approach to detect signals through an SRR WuRad. The above describes identifying a sensor/transceiver in an enhanced range communications through a set of orthogonal codes and a correlation based sequence. One effective low-complexity implementation to identify sensor nodes is CSE.

Although the above describes embodiments in which a sequence correlator is used in the WuRad, it should be appreciated that any suitable identifier that is operable to robustly identify if the transceiver of the power limited node is being addressed in the wake-up signal may be used.

Although the above describes embodiments in relation to sensor nodes, it should be appreciated that the sensor nodes may be any energy limited nodes and need not be sensor nodes. Further, it should be appreciated that the embodiments are not limited to M2M communications and may be applicable to any communications network.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. An energy limited node for use in a communications network comprising an access network node, the energy limited node comprising:
a transceiver operable to change its operational mode from a sleep mode in which the transceiver is not operable to communicate with the access network node to an active mode in which the transceiver is operable to communicate with the access network node; and
a wake-up radio comprising:
a detector operable to detect a wake-up signal from the access network node; and
an identifier operable to determine that the received wake-up signal sequence corresponds to the transceiver of the energy limited node,
wherein the transceiver is operable to change its operation mode from a sleep mode to an active mode upon determination that the received wake-up signal corresponds to the transceiver.

2. An energy limited node according to claim 1, wherein the detector is an ultra-low power receiver operable to detect the signal energy of the wake-up signal.

3. An energy limited node according to claim 2, wherein the identifier is operable to determine that the received wake-up signal corresponds to the transceiver of the energy limited node by comparing the detected signal energy signature sequence of the wake-up signal with identification information of the transceiver stored in the energy limited node.

4. An energy limited node according to any preceding claim, wherein the identifier is a correlator operable to correlate the detected signal energy signature sequence of the wake-up signal with identification information of the transceiver stored in the energy limited node.

5. An energy limited node according to any preceding claim, wherein the wake-up signal comprises a code sequence to identify the transceiver of the energy limited node.

6. An energy limited node according to claim 5, wherein the code sequence has properties to separate and robustly identify the transceiver of the power limited node.

7. An energy limited node according to any preceding claim, further comprising:
a timer operable to periodically activate and/or de-activate the wake-up radio.

8. An energy limited node according to any preceding claim, further comprising:
a trigger operable to activate and/or deactivate the wake-up radio.

9. An energy limited node according to claim 8, wherein the trigger activates the wake-up radio based on environmental factors.

10. An energy limited node according to any preceding claim, further comprising a sensor operable to sense one or more parameters, wherein the transceiver of the energy limited node is operable to change its operational mode from a sleep mode to an active mode if one or more parameters sensed by the sensor satisfies a condition.

11. An energy limited node according to any preceding claim, wherein the detector is operable to wake-up the identifier upon detection of a wake-up signal.

12. An energy limited node for use in a communications network comprising an access network node, the energy limited node comprising:
a transceiver operable to change its operational mode from a sleep mode in which the transceiver is not operable to communicate with the access network node to an active mode in which the transceiver is operable to communicate with the access network node;
a sensor operable to sense one or more parameters; and
a wake-up radio comprising:
a detector operable to detect a wake-up signal from the access network node; and
an identifier operable to determine that the received wake-up signal corresponds to sensor of the energy limited node,
wherein the sensor is operable to be enabled upon determination that the received wake-up signal corresponds to the sensor.

13. A communications system, comprising:
an access network node operable to transmit a wake-up signal; and
an energy limited node for use in a communications network comprising an access network node, the energy limited node comprising:
a transceiver operable to change its operational mode from a sleep mode in which the transceiver is not operable to communicate with the access network node to an active mode in which the transceiver is operable to communicate with the access network node; and
a wake-up radio comprising:
a detector operable to detect a received a wake-up signal from the access network node; and
an identifier operable to determine that the received wake-up signal corresponds to the transceiver of the energy limited node,
wherein the transceiver is operable to change its operation mode from a sleep mode to an active mode upon determination that the received wake-up signal corresponds to the transceiver.

14. A communication method for a communications network comprising an access network node and an energy limited node having a wake-up radio and a transceiver, the method comprising:
transmitting a wake-up signal from the access network node;
receiving the wake-up signal at the wake-up radio of the energy limited node;
determining at the wake-up radio of the energy limited node that the received wake-up signal corresponds to the transceiver of the energy limited node; and
changing the operational mode of the transceiver from a sleep mode in which the energy limited node is not operable to communicate with the access network node to an active mode in which the energy limited node is operable to communicate with the access network node upon determining that the received wake-up signal corresponds to the transceiver of the energy limited node.

15. A computer program product operable when executed on a computer to perform the method of claim 14.

## Amended claims

### Amended claims in accordance with Rule 137(2) EPC.

1. An energy limited node (102; 800) for use in a communications network comprising an access network node (104), the energy limited node (102) comprising:
a transceiver (106) operable to change its operational mode from a sleep mode in which the transceiver (106) is not operable to communicate with the access network node (104) to an active mode in which the transceiver (106) is operable to communicate with the access network node (104); and
a wake-up radio (112; 300; 400; 500; 600; 700; 804) comprising:
a detector (302; 402; 502; 602; 702) operable to detect a wake-up signal from the access network node (104); and
an identifier (304; 404; 504; 604; 704) operable to determine that the received wake-up signal sequence corresponds to the transceiver (106) of the energy limited node (102),
wherein the wake-up radio (112; 300; 400; 500; 600; 700; 804) comprises an ultra low-power super-regenerative receiver wake-up radio,
wherein the detector (302; 402; 502; 602; 702) comprises energy detection circuitry operable to detect the signal energy of the wake-up signal, and
wherein the transceiver (106) is operable to change its operation mode from a sleep mode to an active mode upon determination that the received wake-up signal corresponds to the transceiver (106).

2. An energy limited node according to claim 1, wherein the identifier (304; 404; 504; 604; 704) is operable to determine that the received wake-up signal corresponds to the transceiver (106) of the energy limited node (102) by comparing the detected signal energy signature sequence of the wake-up signal with identification information of the transceiver (106) stored in the energy limited node.

3. An energy limited node according to any preceding claim, wherein the identifier (304; 404; 504; 604; 704) is a correlator operable to correlate the detected signal energy signature sequence of the wake-up signal with identification information of the transceiver (106) stored in the energy limited node (102).

4. An energy limited node according to any preceding claim, wherein the wake-up signal comprises a code sequence to identify the transceiver (106) of the energy limited node.

5. An energy limited node according to claim 5, wherein the code sequence has properties to separate and robustly identify the transceiver of the energy limited node.

6. An energy limited node according to claim 3, 4 or 5, wherein the correlator (304; 404; 504; 604; 704) is operable to perform correlation based sequence estimation using an XNOR gate for receiving said detected signal energy signature sequence and said stored identification information and for outputting to a counter.

7. An energy limited node according to any preceding claim, further comprising:
a timer (806) operable to periodically activate and/or de-activate the wake-up radio (112; 300; 400; 500; 600; 700; 804).

8. An energy limited node according to any preceding claim, further comprising:
a trigger operable to activate and/or deactivate the wake-up radio (112; 300; 400; 500; 600; 700; 804).

9. An energy limited node according to claim 8, wherein the trigger activates the wake-up radio (112; 300; 400; 500; 600; 700; 804) based on environmental factors.

10. An energy limited node according to any preceding claim, further comprising a sensor (110; 808) operable to sense one or more parameters, wherein the transceiver (106) of the energy limited node (102) is operable to change its operational mode from a sleep mode to an active mode if one or more parameters sensed by the sensor (110; 808) satisfies a condition.

11. An energy limited node according to any preceding claim, wherein the detector (302; 402; 502; 602; 702) is operable to wake-up the identifier (304; 404; 504; 604; 704) upon detection of a wake-up signal.

12. An energy limited sensor node (102; 800) for use in a communications network comprising an access network node (104), the sensor node comprising:
a transceiver (106) operable to change its operational mode from a sleep mode in which the transceiver (106) is not operable to communicate with the access network node (104) to an active mode in which the transceiver (106) is operable to communicate with the access network node (104) ;
a sensor (110; 808) operable to sense one or more parameters; and
a wake-up radio (112; 300; 400; 500; 600; 700; 804) comprising:
a detector (302; 402; 502; 602; 702) operable to detect a wake-up signal from the access network node (104); and
an identifier (304; 404; 504; 604; 704) operable to determine that the received wake-up signal corresponds to sensor (110; 808) of the sensor node (102; 800),
wherein the wake-up radio (112; 300; 400; 500; 600; 700; 804) comprises an ultra low-power super-regenerative receiver wake-up radio,
wherein the detector (302; 402; 502; 602; 702) comprises energy detection circuitry operable to detect the signal energy of the wake-up signal, and
wherein the sensor (110; 808) is operable to be enabled upon determination that the received wake-up signal corresponds to the sensor (110; 808).

13. A communications system, comprising:
an access network node (104) operable to transmit a wake-up signal; and
an energy limited node (102; 800) for use in a communications network comprising an access network node (104), the energy limited node (102; 800) comprising:
a transceiver (106) operable to change its operational mode from a sleep mode in which the transceiver (106) is not operable to communicate with the access network node (!04) to an active mode in which the transceiver (106) is operable to communicate with the access network node (104); and
a wake-up radio (112; 300; 400; 500; 600; 700; 804) comprising:
a detector (302; 402; 502; 602; 702) operable to detect a received a wake-up signal from the access network node (104); and
an identifier (304; 404; 504; 604; 704) operable to determine that the received wake-up signal corresponds to the transceiver (106) of the energy limited node (102; 800),
wherein the wake-up radio (112; 300; 400; 500; 600; 700; 804) comprises an ultra low-power super-regenerative receiver wake-up radio,
wherein the detector (302; 402; 502; 602; 702) comprises energy detection circuitry operable to detect the signal energy of the wake-up signal, and
wherein the transceiver (106) is operable to change its operation mode from a sleep mode to an active mode upon determination that the received wake-up signal corresponds to the transceiver (106).

14. A communication method for a communications network comprising an access network node (104) and an energy limited node (102; 800) having a wake-up radio (112; 300; 400; 500; 600; 700; 804) and a transceiver (106), the wake-up radio (112; 300; 400; 500; 600; 700; 804) comprising an ultra low-power super-regenerative receiver wake-up radio radio, the method comprising:
transmitting a wake-up signal from the access network node (104);
receiving the wake-up signal at the wake-up radio (112; 300; 400; 500; 600; 700; 804) of the energy limited node (102; 800);
determining at the wake-up radio (112; 300; 400; 500; 600; 700; 804) of the energy limited node (102; 800) that the received wake-up signal corresponds to the transceiver (106) of the energy limited node; and
changing the operational mode of the transceiver (106) from a sleep mode in which the energy limited node (102; 800) is not operable to communicate with the access network node (104) to an active mode in which the energy limited node (102; 800) is operable to communicate with the access network node (104) upon determining that the received wake-up signal corresponds to the transceiver (106) of the energy limited node,
wherein determining that the received wake-up signal corresponds to the transceiver (106) comprises using energy detection circuitry to detect the signal energy of the wake-up signal.

15. A computer program product operable when executed on a computer to perform the method of claim 14.
